# EUROPÄISCHE PATENTSCHRIFT

(11) **EP 1 114 003 B1**
(45) Veröffentlichungstag und Bekanntmachung des Hinweises auf die Patenterteilung: **19.06.2002**
(21) Anmeldenummer: 99968661.1
(22) Anmeldetag: 06.09.1999
(51) Int. Cl.: C04B 24/38

(54) **PORENBILDENDE PARTIKEL FÜR BETON UND MÖRTEL, VERFAHREN ZU DEREN HERSTELLUNG UND DIESE ENTHALTENDE ZEMENTMÖRTEL**
PORE-FORMING PARTICLES FOR CONCRETE AND MORTAR, METHOD FOR THE PRODUCTION THEREOF AND CEMENT MORTAR CONTAINING SAID PARTICLES
PARTICULES POROGENES POUR BETON ET MORTIER, LEUR PROCEDE DE PRODUCTION, ET MORTIER AU CIMENT CONTENANT CES PARTICULES

(30) Priorität: 07.09.1998 AT 151498
(43) Veröffentlichungstag der Anmeldung: 11.07.2001
(73) Patentinhaber: Heidelberger Bauchemie GmbH, 69120 Heidelberg (DE)
(72) Erfinder: AXMANN, Heinz, A-3400 Klosterneuburg (AT)
(74) Vertreter: Grussdorf, Jürgen, Dr.
(86) Internationale Anmeldenummer: EP9906539
(87) Internationale Veröffentlichungsnummer: WO0014028

(56) Entgegenhaltungen:
- DE-A- 3 230 716
- GB-A- 1 508 570
- US-A- 4 487 864
- US-A- 5 595 595
- PATENT ABSTRACTS OF JAPAN vol. 018, no. 209 (C-1190), 13. April 1994 (1994-04-13) & JP 06 009255 A (AROMA KAGAKU KIKAI KOGYO:KK;OTHERS: 01), 18. Januar 1994 (1994-01-18)

## Beschreibung

Die Erfindung betrifft ein Verfahren zur Herstellung porenbildenden Partikel für Beton oder Mörtel sowie von Poren enthaltenden Festkörpern aus einem Gemisch von hydraulischen Bindemitteln wie Zement, gegebenenfalls mit einem Gehalt an weiteren Zuschlagstoffen und Zusatzstoffen, wobei dem Gemisch vor dem Aushärten, ein Granulat eines sich in alkalischem Milieu auflösenden Porenbildners beigemengt wird.

Es ist bekannt, zur Herstellung von Porenbeton in der Betonmatrix kleine lösliche Partikel einzubauen, die sich im alkalischen Milieu des Betons auflösen und entsprechende Mikrohohlräume zurücklassen. Die verwendeten Materialien sind auf der Basis von Harnstoff-Formaldehydkondensaten hergestellt. Diese Materialien haben allerdings den Nachteil, bei der Lagerung zu vernetzen und somit ihre Löslichkeit und Wirksamkeit zu verlieren. Ein weiterer Nachteil dieser bekannten Materialien besteht darin, daß die Harnstoff-Formaldehydkondensate in aufwendigen Verfahren zunächst auf die benötigte Korngröße vermahlen werden müssen und anschließend über Siebvorgänge durch Siebe mit entsprechender Rastergröße die gewünschte Korngrößenverteilung herbeigeführt wird.

US 5,595,595 beschreibt den Zusatz von festen wässrigen Gelen zu Betonmischungen, welche unter anderem auch aus Stärke, insbesondere aus unmodifizierter Stärke oder durch Hydrolyse modifizierter Stärke bestehen können. Die festen Gele werden in Partikel von 1 - 3 mm Durchmesser aufgeteilt und so dem Beton zugesetzt, so daß sie nach Aushärten des Betons und Verdampfen des enthaltenen Wassers zusammentrocknen und entsprechend große Hohlräume hinterlassen.

DE 32 30 716 betrifft Stärkepartikel, die in wässriger Säure auf eine Partikelgröße von 20 - 40 µm aufgequollen und in alkalischem Medium mit Epichlorhydrin oder ähnlichen Substanzen vernetzt wird. Anschließend werden diese Stoffe mit hydrophoben Materialien eingekapselt, um ein Eindringen von Wasser zu verhindern. Dieses Produkt soll in Dispersionen zum Bestreichen von Papieroberflächen eingearbeitet werden, insbesondere bei Aufbringung von Mikrokapseln, die dadurch gegen vorzeitiges Zerdrücken geschützt werden.

GB 1 508 570 A beschreibt die Herstellung von vernetzten, wasserunlöslichen Stärkepräparaten, welche in der Lebensmittelindustrie oder für die Chromatographie eingesetzt werden sollen. Stärke wird dabei in wässrigen Alkali gelöst und das gebildete Gel mit Epichlorhydrin vernetzt, als dünne Schicht getrocknet und die gebildeten Flocken auf eine Partikelgröße unter 2 mm geteilt.

US 4,487,864 betrifft die Herstellung von Mischungen aus wasserlöslichen Kohlenhydratpolymeren mit wasserquellbaren, nicht flockenbildenden organischen Polymeren. Die Mischung soll als Wasserretentionsmittel zur Herstellung von Mörtel, Beton, Spaltenfüller, Wandbeschichtungen, Fliesenklebstoffen und Gipsprodukten verwendet werden. Als wasserlösliche Kohlenhydrate sind unter anderem modifizierte Stärke oder wasserlösliche Zelluloseether genannt, als vernetzte Produkte werden insbesondere quervernetzte Zelluloseether und Polyacrylamide genannt.

Patent abstract JP 06009255 betrifft aufschäumbare Proteinabbauprodukte zur Herstellung von Mikrosphären, mit denen ein Leichtbeton hergestellt werden kann.

Das erfindungsgemäße Verfahren basiert auf der Erkenntnis, daß natürliche Stärke eine Korngröße von etwa 30 µm aufweist und quellfähig ist. Durch geeignete Vernetzungsmittel können die Stärketeilchen so vernetzt werden, daß sie im Milieu des Betons auf die benötigte Korngröße von etwa 50 µm bis 70 µm quellen. Dabei hat sich überraschend herausgestellt, daß sich die vernetzten und aufgequollenen Stärketeilchen nach einiger Zeit im alkalischen Milieu des Betons auflösen und Hohlräume hinterlassen, die dem Beton die gewünschte Eigenschaft verleihen, insbesondere hinsichtlich der Frost-Tausalzstabiliät.

Das erfindungsgemäße Verfahren zur Herstellung der porenbildenden Partikel ist dadurch gekennzeichnet, daß natürliche Stärke oder Stärkederivate
a) in Wasser oder einem Wasser-Lösungsmittelgemisch auf die gewünschte Partikelgröße zwischen 50 µm und 120 µm, bevorzugt zwischen 50 µm und 80 µm, vorgequollen und sodann durch Zugabe eines Stärkevernetzungsmittels der Quellvorgang beendet wird, oder
b) in saurem Milieu mit soviel Vemetzungsmittel zur Reaktion gebracht werden, daß nach Quellung im alkalischen Bereich die gewünschte Partikelgröße zwischen 50 µm und 120 µm, bevorzugt 50 pm und 80 µm, erreicht wird.

Das erfindungsgemäße Verfahren zur Herstellung der Festkörper ist dadurch gekennzeichnet, daß der Porenbildner aus quellfähigen Partikeln aus vernetzter Stärke besteht. Verwendbar sind grundsätzlich alle Vernetzer, die Stärke derart vernetzen, daß eine eingeschränkte Quellung auf die gewünschte Korngröße erfolgt.

Bevorzugt werden zur Vernetzung der Stärke Verbindungen eingesetzt, die mit den OH-Gruppen der Stärke reagieren und z.B. dann Ether-, Ester- oder Urethanverbindungen bilden.

Für die Bildung von Stärkeethern sind Oxiranverbindungen, z.B. Epichlorhydrin und Propylenoxid bekannt sowie Melamin oder Harnstoffharze, die reaktive N-Methylolgruppen enthalten, wie z.B. Hexamethylmethylolmelamin, Tetramethylolharnstoff u.a.

Für die Bildung von Estern werden u.a. organische und anorganische Säurechloride, wie z.B. Acylhalogenide von mehrbasischen Säuren, z.B. Maleinsäuredichlorid und Phosphoroxytrichlorid verwendet. Darüber hinaus können Trimetaphosphat, z.B. Na-Trimetaphosphat und auch Isocyanate zur Vernetzung verwendet werden. In einem wasserfreien Lösungsmittelmilieu, z.B. Toluol kann, z.B. Toluoldiisocyanat verwendet werden.

Gut verwendbar sind beispielsweise die Etherbindungsbildner aus der Gruppe Epichlorhydrin, oder Hexamethylmethylolmelamin und die Esterbildner aus der Gruppe POCl₃ und Maleinsäureanhydrid sowie verkappte Isocyanate.

Das alkalische Milieu im Beton liegt im Bereich über einem pH-Wert von 12, insbesondere etwa bei pH 12,5. Die gewünschte durchschnittliche Korngröße nach dem Quellen, liegt zwischen 30 µm und 120 µm bevorzugt zwischen 60 µm und 80 µm. Je höher die Vernetzung erfolgt, desto geringer ist der Quellungsgrad.

Die Herstellung der porenbildenen Partikel kann nach zwei Varianten erfolgen:

Nach der ersten Variante erfolgt die Vernetzung gerade in dem Ausmaß, daß im alkalischen Milieu, die gewünschte Partikelgröße erreicht wird, der Quellvorgang erfolgt dabei in der Zementmischung.

Nach der zweiten Variante werden die Stärkepartikel vorerst in einem geeigneten Wasser-Lösungsmittelgemisch auf die gewünschte Größe vorgequollen, und dann mit dem Vernetzungsmittel z.B. Epichlorhydrin so hoch vernetzt, daß praktisch keine Volumenzunahme bei der Erhöhung der Alkalität zu verzeichnen ist.

Bevorzugte Lösungsmittel sind Dimethylformamid und Dimethylsulfoxid. Es können aber alle bekannten organischen Lösungsmittel für Stärke verwendet werden.

Im folgenden wird die Erfindung anhand von konkreten Ausführungsbeispielen näher erläutert.

Dabei betreffen Beispiel 1 und 2 das erfindungsgemäße Verfahren zur Herstellung der porenbildenen Partikel und Beispiel 3 und 4 die Zusammensetzung eines erfindungsgemäßen Betons.

### Beispiel 1

Native Kartoffelstärke wird in 50 Masse% Wasser aufgeschlämmt.
Dann wird so lange Dimethylformamid zugefügt, bis das Stärkekorn auf 50 µm bis 70 µm aufquillt. Danach, wird bei langsam ansteigenden pH-Werten durch Zugabe von NaOH mit POCl₃ die Stärke so hoch vernetzt, daß bei einem pH von 12 keine Volumenzunahme mehr zu verzeichnen ist.
Dies wird bei einer Konzentration über 95 Masse% Vernetzer (POC13) bezogen auf die eingesetzte Stärke sicher erreicht.
Mit diesem Verfahren ergeben sich besonders mechanisch stabile Teilchen, wie sie in steifen Betonen von Vorteil sind.

### Beispiel 2

Native Kartoffelstärke wird in 50 Masse% Wasser aufgeschlämmt.
Der pH-Wert wird mit Säure (0,1 N HCI) auf 4,5 eingestellt (Indikator: Methylorange) und während der Reaktion konstant gehalten. Zum Vernetzen werden 2,5 Masse% Hexamethylmethylolamin (z. B. Cibamin M 100) hinzugefügt und bei Zimmertemperatur etwa 8 Stunden gerührt. Der Slurry wird abfiltriert und mit Wasser neutral gewaschen.

### Beispiel 3

Zusammensetzung eines erfindungsgemäßen Zementmörtels:
300 kg Zement/m³ (CEM I 32,5 R),
1850 kg/m³ Zuschlag: Sand und Kies (Siebline B16), wobei der
Feinsandanteil (0 bis 0,25 mm): 7 Masse% bezogen auf die Gesamtzuschlagstoffe beträgt,
und
pulverförmige Stärke aus Beispiel 1: 0,1 bis 2 Masse% (bezogen auf das Trockengemisch).

Die angegebene Zusammensetzung ergibt einen Beton mit hohem Frost/Tau-Widerstand und Tausatzbeständigkeit.

### Beispiel 4

Die Zugabe der vernetzten Stärke aus Beispiel 2 in einer Menge von 0,5 Masse% bezogen auf ein trockenes Mörtelgemisch aus
300 kg Zement/m³ (CEM I 32,5 R),
1850 kg/m³ Zuschlag: Sand und Kies (Sieblinie B16), wobei der Feinsandanteil (0 bis 0,25 mm) 7 Masse% bezogen auf die Gesamtzuschlagstoffe beträgt,
ergibt einen Beton, welcher eine ausreichende Frost-Taustabilität aufweist.

## Patentansprüche

1. Verfahren zur Herstellung von porenbildenden Partikeln für Beton oder Mörtel, **dadurch gekennzeichnet, daß** körnige natürliche Stärke oder Stärkederivate
a) in Wasser oder einem Wasser-Lösungsmittelgemisch auf eine Partikelgröße zwischen 50 µm und 120 µm vorgequollen und sodann durch Zugabe eines Stärkevernetzungsmittels der Quellvorgang beendet wird,
oder
b) mit soviel Vernetzungsmittel zur Reaktion gebracht wird, daß bei der Quellung im alkalischen Bereich eine Partikelgröße zwischen 50 µm und 120 µm erreicht wird.

2. Verfahren nach Anspruch 1, **dadurch gekennzeichnet daß** die gequollene und vernetzte Stärke oder das Stärkederivat eine Partikelgröße von 50 µm bis 80 µm aufweisen.

3. Verfahren nach Anspruch 1 oder 2, **dadurch gekennzeichnet, daß** das Vernetzungsmitlel aus der Gruppe der Etherbildner, wie Oxiranverbindungen wie Epichlorhydrin, veretherte N-Methylolderivate, freie Methylolderivate und Methylharnstoff, oder der Gruppe der Esterbildner wie anorganische Säurehalogenide wie POCl₃ oder organische Esterbildner wie Maleinsäureanhydrid, Phthalsäureanhydrid, Maleinsäurechlorid, Trimetaphosphate oder isocyanate gewählt ist.

4. Verfahren zur Herstellung von Poren enthaltenden Festkörpern aus einem Gemisch von hydraulischen Bindemitteln, wie Zement, Zuschlagstoffen und Zusatzstoffen, wobei dem Gemisch vor dem Aushärten ein Granulat eines sich in alkalischem Milieu auflösenden Porenbildners beigemengt wird, **dadurch gekennzeichnet, daß** nach dem Verfahren der Ansprüche 1 oder 2 hergestellte Porenbildner verwendet werden.

5. Porenbildner zur Herstellung von Poren enthaltenden Feststoffen bestehend aus vorgequollenen und vernetzten Stärkepartikeln mit einer Partikelgröße von 50 µm bis 120 µm.

6. Porenbildner nach Anspruch 5, **dadurch gekennzeichnet, daß** die Stärkepartikel eine Größe von 50 µm bis 80 µm aufweisen.

7. Zementmörtel zur Herstellung von Frost- und Tausalz beständigem Beton enthaltend hydraulische Bindemittel und Zuschlagstoffe, **dadurch gekennzeichnet, daß** er 0,1 Masse% bis 2 Masse% vorgequollene und vernetzte Stärkepartikel mit einer Partikelgröße von 30 µm bis 120 µm enthält.

8. Zementmörtel zur Herstellung von Porenbeton enthaltend hydraulische Bindemittel und Zuschlagstoffe, **dadurch gekennzeichnet, daß** er 0,1 Masse% bis 2 Masse% vorgequollene Stärkepartikel mit einer Partikelgröße von 30 µm bis 120 µm und 0,1 Masse% bis 2 Masse% eines Vernetzungsmittels enthält.

9. Zementmörtel nach einem der Ansprüche 8 oder 9, **dadurch gekennzeichnet, daß** er 0,5 Masse% bis 1 Masse% Stärkepartikel enthält

## Claims

1. Process for the production of pore-forming particles for concrete or mortar, **characterised in that** granular starch or starch derivative
a) is pre-swollen in water or a water-solvent mixture to a particle size between 50 µm and 120 µm and then the swelling process is ended by addition of a starch cross-linking agent or
b) is brought to reaction with so much cross-linking agent that, in the case of the swelling in the alkaline region, a particle size between 50 µm and 120 µm is achieved.

2. Process according to claim 1, **characterised in that** the swollen and cross-linked starch or the starch derivative has a particle size of 50 µm to 80 µm.

3. Process according to claim 1 or 2, **characterised in that** the cross-linking agent is selected from the group of ether formers, such as oxirane compounds, such as epichlorohydrin, etberified N-methylol derivatives, free methylol derivatives and methylurea, or from the group of ester formers, such as inorganic acid halides, such as POCl₃, or organic ester formers, such as maleic acid anhydride, phthalic acid anhydride, maleic acid chloride, tetrametaphosphates or isocyanate.

4. Process for the production of pore-containing solid bodies from a mixture of hydraulic binding agents, such as cement, aggregates and additives, whereby, before the hardening, to the mixture is admixed a granulate of a pore former dissolving in alkaline medium, **characterised in that** there is used a pore former produced according to the process of claims 1 or 2.

5. Pore former for the production of pore-containing solid materials consisting of pre-swollen and cross-linked starch particles with a particle size of 50 µm to 120 µm.

6. Pore former according to claim 5, **characterised in that** the starch particles have a size of 50 µm to 80 µm.

7. Cement mortar for the production of frost- and thawing salt-resistant concrete containing hydraulic binding agents and aggregates, **characterised in that** it contains 0.1 weight % to 2 weight % of pre-swollen and cross-linked starch particles with a particle size of 30 µm to 120 µm.

8. Cement mortar for the production of porous concrete containing hydraulic binding agents and aggregates, **characterised in that** it contains 0.1 weight % to 2 weight % of pre-swollen starch particles with a particle size of 30 µm to 120 µm and 0.1 weight % to 2 weight % of a cross-linking agent.

9. Cement mortar according to claims 8 or 9, **characterised in that** it contains 0.5 weight % to 1 weight % of starch particles.

## Revendications

1. Procédé de fabrication de particules formant des pores pour du béton ou du mortier, **caractérisé en ce que** des grains d'amidon naturel ou de dérivés d'amidon
a) sont prégonflés dans de l'eau ou dans un mélange d'eau et de solvant à une taille de particules comprise entre 50 µm et 120 µm, l'opération de gonflement étant ensuite arrêtée par addition d'un agent de réticulation de l'amidon, ou
b) sont amenés à réagir avec une quantité d'agent de réticulation telle que l'on obtienne une taille de particules comprise entre 50 µm et 120 µm lors du gonflement dans la plage alcaline.

2. Procédé selon la revendication 1, **caractérisé en ce que** l'amidon ou le dérivé d'amidon réticulé et gonflé présente une taille de particules comprise entre 50 µm et 80 µm.

3. Procédé selon la revendication 1 ou 2, **caractérisé en ce que** l'agent de réticulation est choisi dans le groupe des agents de formation d'éthers comme des composés d'oxirane tels que l'épichlorhydrine, les dérivés éthérifiés de N-méthylol, les dérivés de méthylol libres et la méthylurée, ou dans le groupe des agents de formation d'esters comme les halogénures d'acides minéraux tels que POCl₃ ou des agents de formation d'esters organiques tels que l'anhydride d'acide maléique, l'anhydride d'acide phtalique, le chlorure d'acide maléique, les trimétaphosphates ou les isocyanates.

4. Procédé de fabrication de corps solides contenant des pores à partir d'un mélange de liants hydrauliques tels que le ciment, des agrégats et des additifs, un granulé d'agent de formation de pores se dissolvant dans un milieu alcalin étant ajouté au mélange avant son durcissement, **caractérisé en ce que** l'on utilise des agents de formation de pores préparés par le procédé selon les revendications 1 ou 2.

5. Agent de formation de pores pour la fabrication de solides contenant des pores, constitué de particules d'amidon prégonflé et réticulé d'une taille de particules comprise entre 50 µm et 120 µm.

6. Agent de formation de pores selon la revendication 5, **caractérisé en ce que** les particules d'amidon présentent une taille comprise entre 50 µm et 80 µm.

7. Mortier au ciment pour la préparation de béton résistant au gel et au sel de fonte, contenant des liants hydrauliques et des agrégats, **caractérisé en ce qu'**il contient de 0,1 % en poids à 2 % en poids de particules d'amidon gonflé et réticulé d'une taille de particules de 30 µm à 120 µm.

8. Mortier au ciment pour la préparation de béton poreux contenant des liants hydrauliques et des agrégats, **caractérisé en ce qu'**il contient de 0,1 % en poids à 2 % en poids de particules d'amidon gonflé et réticulé d'une taille de particules de 30 µm à 120 µm et de 0,1 % en poids à 2 % en poids d'un agent de réticulation.

9. Mortier au ciment selon l'une des revendications 8 ou 9, **caractérisé en ce qu'**il contient de 0,5 % en poids à 1 % en poids de particules d'amidon.
